# EUROPÄISCHE PATENTSCHRIFT

(11) **EP 1 249 687 B1**
(45) Veröffentlichungstag und Bekanntmachung des Hinweises auf die Patenterteilung: **08.08.2012**
(21) Anmeldenummer: 02006870.6
(22) Anmeldetag: 26.03.2002
(51) Int. Cl.: G01F 1/60

(54) **Magnetisch-induktives Durchflussmessgerät und magnetisch-induktives Durchflussmessverfahren**
Magnetic-inductive flow sensor and magnetic-inductive flow measuring method
Débitmètre magnéto-inductif et procédé de mesure de débit magnéto-inductif

(30) Priorität: 10.04.2001 DE 10118003
(43) Veröffentlichungstag der Anmeldung: 16.10.2002
(73) Patentinhaber: KROHNE MESSTECHNIK GMBH & CO. KG, 47058 Duisburg (DE)
(72) Erfinder: Brockhaus, Helmut, Dr.-Ing., 46537 Dinslaken (DE)
(74) Vertreter: Gesthuysen, von Rohr & Eggert

(56) Entgegenhaltungen:
- GB-A- 2 333 161
- US-A- 5 677 496

## Beschreibung

Die Erfindung betrifft ein magnetisch-induktives Durchflußmeßgerät für strömende Medien, gemäß dem oberbegriff des Anspruchs 1.

Magnetisch-induktive Durchflußmeßgeräte bzw. magnetisch-induktive Durchflußmeßverfahren sind grundsätzlich schon seit längerer Zeit gut bekannt und werden vielfältig in unterschiedlichen Einsatzgebieten verwendet. Das grundlegende Prinzip eines magnetisch-induktiven Durchflußmeßgeräts für strömende Medien geht dabei bereits auf Farraday zurück, der im Jahre 1832 vorgeschlagen hat, das Prinzip der elektrodynamischen Induktion zur Strömungsgeschwindigkeitsmessung anzuwenden. Nach dem Farradayschen Induktionsgesetz entsteht in einem strömenden Medium, welches Ladungsträger mit sich führt und durch ein Magnetfeld hindurchfließt, eine elektrische Feldstärke senkrecht zur Strömungsrichtung und senkrecht zum Magnetfeld. Das Farradaysche Induktionsgesetz wird bei einem magnetisch-induktiven Durchflußmeßgerät dadurch ausgenutzt, daß ein Magnet, im allgemeinen bestehend aus zwei Magnetpolen mit je einer Magnetspule, ein Magnetfeld senkrecht zur Strömungsrichtung in dem Meßrohr erzeugt. Innerhalb dieses Magnetfelds liefert jedes sich durch das Magnetfeld bewegende und eine gewisse Anzahl von Ladungsträgern aufweisende Volumenelement des strömenden Mediums mit der in diesem Volumenelement entstehenden Feldstärke einen Beitrag zu einer über Meßelektroden abgreifbaren Meßspannung. Die Meßelektroden werden bei den bekannten magnetisch-induktiven Durchflußmeßgeräten derart ausgeführt, daß sie entweder galvanisch oder kapazitiv mit dem strömenden Medium gekoppelt sind. Ein besonderes Merkmal der magnetisch-induktiven Durchflußmeßgeräte ist die Proportionalität zwischen der Meßspannung und der über den Querschnitt des Meßrohres gemittelten Strömungsgeschwindigkeit des Mediums, d. h. zwischen Meßspannung und Volumenstrom.

Eingangs ist gesagt worden, daß ein zeitlich alternierendes Magnetfeld erzeugt wird. Aus dem Stand der Technik sind dazu unterschiedliche Vorgehenswiesen bekannt. Eine magnetisch-induktive Durchflußmessung ist z. B. mit einem Wechselfeld möglich, wobei dabei typischerweise die Magnetspulen des Magneten direkt vom Stromnetz mit einer sinusförmigen 50-Hz-Wechselspannung gespeist werden. Die aufgrund der Strömung erzeugte Meßspannung zwischen den Meßelektroden wird dabei jedoch durch transformatorische Störspannungen sowie Netzstörspannungen überlagert. Heutzutage wird daher bei magnetisch-induktiven Durchflußmessungen im allgemeinen mit einem umpolbaren magnetischen Gleichfeld gearbeitet. Ein solches umpolbares magnetisches Gleichfeld erhält man, indem den Magnetspulen des Magneten ein Strom mit zeitlich rechteckförmigem Verlauf zugeführt wird, der seine Polarität zeitlich alternierend ändert. Möglich ist jedoch auch eine magnetisch-induktive Durchflußmessung mit Hilfe eines pulsierenden Gleichfelds, das dadurch erhalten wird, daß die Magnetspulen des Magneten nur periodenweise mit einem zeitlich rechteckförmigen, immer die gleiche Polarität aufweisenden Strom versorgt werden.

Das eingangs beschriebene magnetisch-induktive Durchflußmeßgerät und das eingangs beschriebene magnetisch-induktive Durchflußmeßverfahren sind z. B. aus der US 5,677,496 bekannt. In dieser Druckschrift ist beschrieben, daß ein Wert für den Gleichspannungsanteil der an einer Meßelektrode oder an beiden Meßelektroden jeweils gegenüber einem Referenzpotential abgegriffenen Spannung ermittelt wird, um diesen von einem gemessenen Durchflußspannungswert zu subtrahieren, der sich aus einem Wert für den Durchfluß des strömenden Mediums durch das Meßrohr und einem Wert für den in Rede stehenden Gleichspannungsanteil zusammensetzt. Auf diese Weise wird ein Spannungswert erhalten, der - nun nicht mehr fehlerbehaftet durch den Gleichspannungswert - ein direktes Maß für den Durchfluß des strömenden Mediums durch das Meßrohr ist.

Es ist nun die Aufgabe der Erfindung, ein solches magnetisch-induktives Durchflußmeßgerät bzw. ein solches magnetisch-induktives Durchflußmeßverfahren anzugeben, das einem Verwender neben der Angabe des Durchflusses zusätzliche Informationen bereitstellt.

Ausgehend von dem eingangs beschriebenen magnetisch-induktiven Durchflußmeßgerät ist das erfindungsgemäße magnetisch-induktive Durchflußmeßgerät, mit dem die zuvor hergeleitete und aufgezeigte Aufgabe gelöst ist durch die Merkmale des kennzeichenteils des Anspruchs 1 gekennzeichnet

Erfindungsgemäß wird somit der Effekt, daß an den Meßelektroden neben der durch das Magnetfeld induzierten Spannung eine weitere Spannung entsteht, nämlich die elektrochemische Störspannung, genutzt, um dem Verwender des magnetisch-induktiven Durchflußmeßgeräts eine zusätzliche Information anzubieten, die ihm einen Zusatznutzen bereitstellt. Auf den dem Verwender durch die Erfindung bereitgestellten Zusatznutzen wird im einzelnen weiter unten im Rahmen der Erläuterung bevorzugter Ausführungsbeispiele der Erfindung eingegangen.

Die erfindungsgemäß genutzte elektrochemische Störspannung hat ihren Ursprung in Kontaktpotentialen, die durch den Kontakt des strömenden Mediums mit den Meßelektroden entstehen und von den unterschiedlichen chemischen Potentialen des strömenden Mediums einerseits und dem Material der Meßelektroden andererseits herrühren. Die ansonsten eine Störgröße darstellenden Kontaktpotentiale werden somit erfindungsgemäß dazu genutzt, neben dem Durchflußwert eine zusätzliche Meßgröße an den Verwender ausgeben zu können, die eine Aussage über weitere Parameter des Mediums, wie dessen Leitfähigkeit bzw. dessen Ladungsträgerkonzentration, liefert. Damit ist z. B. auch ein Medienwechsel in dem Meßrohr über eine geänderte elektrochemische Störspannung detektierbar.

Wenn zuvor gesagt worden ist, daß eine Ausgabeeinrichtung zur Ausgabe eines Wertes für den Gleichspannungsanteil der abgegriffenen Spannung vorgesehen ist, so ist damit gemeint, daß entweder der Wert für den Gleichspannungsanteil selbst, ein gemittelter Wert für den Gleichspannungsanteil oder ein auf dem Gleichspannungsanteil basierender und daraus abgeleiteter Wert, wie der ph-Wert des durch das Meßrohr strömenden Mediums ausgegeben wird.

Grundsätzlich kann für jede Meßelektrode ein eigenes Referenzpotenzial vorgesehen sein, und die Potentialdifferenzen des Referenzpotentials zu den Potentialen der jeweiligen Meßelektrode bzw. dem strömenden Medium, dem Meßrohr usw. sind grundsätzlich beliebig. Gemäß einer bevorzugten Weiterbildung der Erfindung ist jedoch vorgesehen, daß als Referenzpotential das Erdpotential vorgesehen ist. Insbesondere gilt bei der Verwendung des Erdpotentials als Referenzpotential, aber auch für andere Referenzpotentiale, daß für beide Meßelektroden vorzugsweise dasselbe Referenzpotential vorgesehen ist. Ist insbesondere für beide Meßelektroden als Refenzpotential gemeinsam das Erdpotential vorgesehen, so ist der Aufbau des magnetisch-induktiven Durchflußmeßgeräts sehr einfach und der mit der Auswertung der Meßsignale verbundene Aufwand ist verringert.

Grundsätzlich ist es möglich, daß die in einer bestimmten Periode des zeitlich alternierenden Magnetfelds gegenüber dem Referenzpotential abgegriffene Spannung direkt für die Ermittlung des Wertes für den Gleichspannungsanteil verwendet wird. Gemäß einer bevorzugten Weiterbildung der Erfindung ist jedoch vorgesehen, daß zur Ermittlung des Wertes für den Gleichspannungsanteil die an einer Meßelektrode gegenüber dem Referenzpotential abgegriffene Spannung über mehrere Perioden des zeitlich alternierenden Magnetfelds aufsummiert und gemittelt wird. Bei gleichbleibenden Strömungsbedingungen des Mediums ist es auf diese Weise nämlich möglich, einen annähernd konstanten Wert für den Gleichspannungsanteil auszugeben, da bei dieser Vorgehensweise das Signal-zu-Rausch-Verhältnis wesentlich verbessert ist.

Werden für die Ermittlung des Wertes für den Gleichspannungsanteil die beiden an den Meßelektroden gegenüber einem jeweiligen Referenzpotential abgegriffenen Spannungen verwendet, so ist zur Erzielung des zuvor genannten Vorteils gemäß einer bevorzugten Weiterbildung der Erfindung eine Summiereinrichtung vorgesehen, mit der zur Ermittlung des Wertes für den Gleichspannungsanteil in einer Meßperiode die Summe der an den beiden Meßelektroden gegenüber dem Referenzpotential abgegriffenen Spannungen ermittelbar ist. In diesem Zusammenhang ist es ganz besonders bevorzugt, daß zusätzlich eine Mittelungseinrichtung vorgesehen ist, mit der zur Ermittlung des Wertes für den Gleichspannungsanteil die Summen der an den Meßelektroden gegenüber dem Referenzpotential abgegriffenen Spannungen über mehrere Perioden des zeitlich alternierenden Magnetfelds mittelbar sind.

Zur Erzielung definierter Verhältnisse ist gemäß einer bevorzugten Weiterbildung der Erfindung ferner eine Erdungseinrichtung für das strömende Medium vorgesehen. Als eine solche Erdungseinrichtung kommen vorzugsweise Erdungselektroden, Erdungsringe und/oder eine wenigstens teilweise metallische Rohrleitung in Frage. Dabei kann für die Erdungseinrichtungen einerseits und für die Meßelektroden andererseits das gleiche Material verwendet werden. Gemäß einer bevorzugten Weiterbildung der Erfindung ist jedoch vorgesehen, daß das Material für die Erdungseinrichtung von dem Material für die Meßelektroden verschieden ist. Auf diese Weise können Effekte genutzt werden, die von den unterschiedlichen Kontaktpotentialen zwischen dem durch das Meßrohr strömenden Medium einerseits und den aus unterschiedlichen Materialien hergestellten Meßelektroden bzw. Erdungseinrichtungen andererseits herrühren.

Die Ausgabeeinrichtung des magnetisch-induktiven Durchflußmeßgeräts kann z. B. in Form einer optischen Anzeige, in Form eines Bus-Systems (Feldbus), in Form eines Stromausgangs und/oder in Form eines Frequenzausgangs realisiert sein. Unabhängig von der Art der Ausgabeeinrichtung ist gemäß einer bevorzugten Weiterbildung der Erfindung vorgesehen, daß die Ausgabeeinrichtung einen Statusausgang mit einer Schwellwertfunktion aufweist. Damit ist gemeint, daß die Ausgabeeinrichtung nicht bzw. nicht nur einen Wert für den Gleichspannungsanteil ausgibt, sondern einen Statuswert, der angibt, ob ein bestimmter Status vorliegt oder nicht. Der Statusausgang ist dabei derart ausgelegt, daß ein bestimmter Status als vorhanden erfaßt und angezeigt wird, wenn der gemessene Wert einen vorbestimmten Schwellwert übersteigt oder unterschreitet.

Eine andere bevorzugte Weiterbildung der Erfindung liegt darin, eine pH-Berechnungseinrichtung vorzusehen, mit der bei bekanntem strömenden Medium dessen pH-Wert mit Hilfe des Gleichspannungsanteils der an einer Meßelektrode oder an beiden Meßelektroden jeweils gegenüber einem Referenzpotential abgegriffenen Spannung berechenbar ist. Dabei kann die pH-Berechnungseinrichtung einerseits Bestandteil der Ausgabeeinrichtung sein, andererseits jedoch auch von dieser getrennt vorgesehen sein. Mit dieser bevorzugten Weiterbildung der Erfindung wird also die Möglichkeit geschaffen, mit Hilfe des Gleichspannungsanteils der abgegriffenen Spannung den pH-Wert zu berechnen, so daß eine Vor-Ort-Kalibrierung ermöglicht wird. Dabei kann der ermittelte pH-Wert geräteintern verwendet und/oder ausgegeben werden.

Gemäß einer bevorzugten Weiterbildung der Erfindung ist schließlich vorgesehen, daß eine Korrigiereinrichtung Verwendung findet, mit der der Wert für den Gleichspannungsanteil der an einer Meßelektrode oder an beiden Meßelektroden jeweils gegenüber einem Referenzpotential abgegriffenen Spannung in Abhängigkeit von dem Durchfluß des strömenden Mediums korrigierbar ist. Dabei wird berücksichtigt, daß der Gleichspannungsanteil der abgegriffenen Spannung von der Durchflußgeschwindigkeit des strömenden Mediums durch das Meßrohr abhängt. Fehler durch diese Einflußgröße werden somit weitestgehend vermieden.

Im einzelnen gibt es nun eine Vielzahl von Möglichkeiten, das erfindungsgemäße magnetisch-induktive Durchflußmeßgerät auszugestalten und weiterzubilden. Dazu wird auf die dem unabhängigen Patentanspruch nachgeordneten Patentansprüche sowie auf die folgende detaillierte Beschreibung eines bevorzugten Ausführungsbeispiels der Erfindung unter Bezugnahme auf die Zeichnung verwiesen. In der Zeichnung zeigt
- Fig. 1: schematisch den Aufbau eines magnetisch-induktiven Durchflußmeßgeräts gemäß einem bevorzugten Ausführungsbeispiel der Erfindung und
- Fig. 2: schematisch den Verlauf des erzeugten Magnetfelds bzw. der an den Meßelektroden abgegriffenen Spannung.

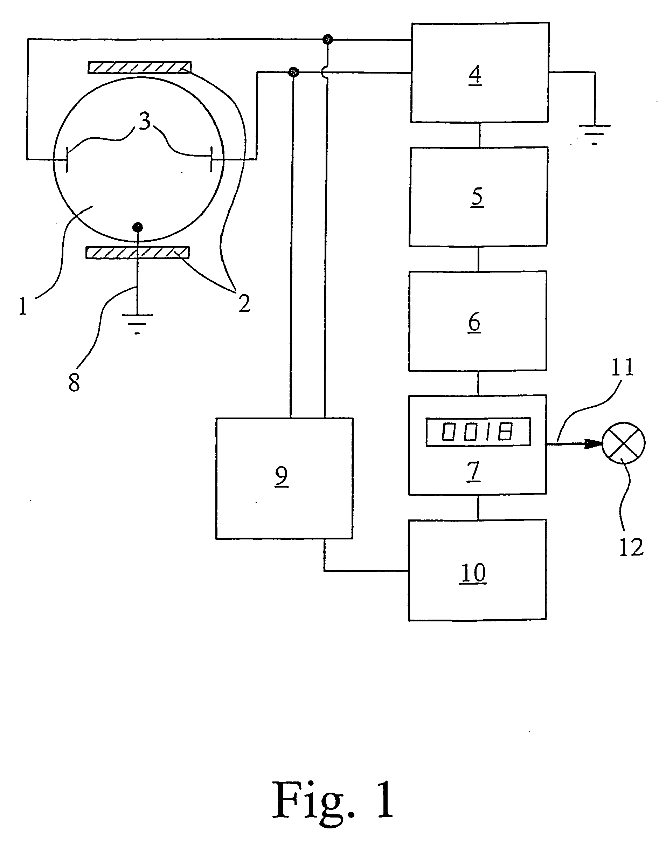

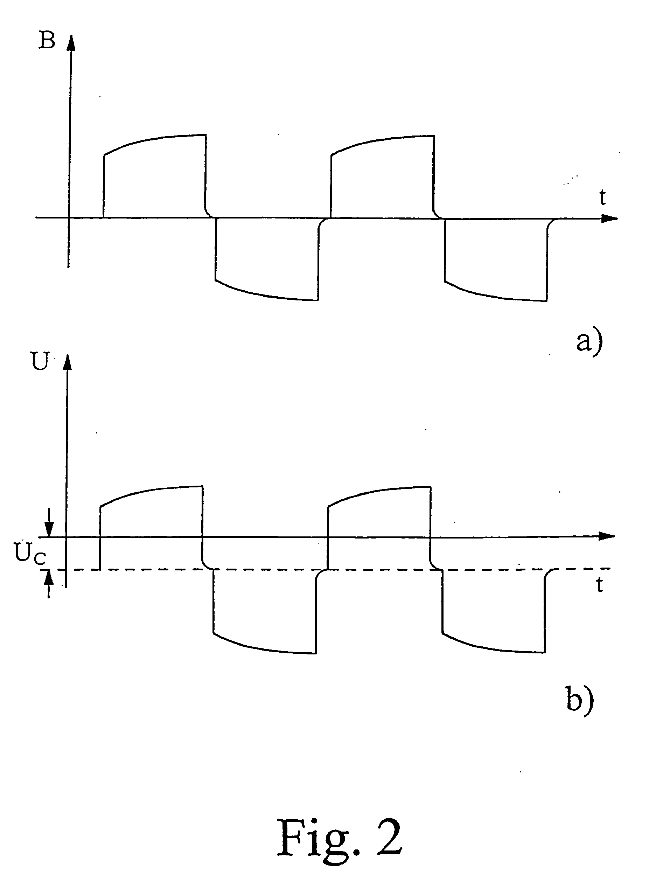

Aus Fig. 1 ist schematisch der Aufbau eines magnetisch-induktiven Durchflußmeßgeräts gemäß einem bevorzugten Ausführungsbeispiel der Erfindung ersichtlich. Das magnetisch-induktive Durchflußmeßgerät weist ein Meßrohr 1, einen Magneten mit zwei Magnetspulen 2 sowie zwei Meßelektroden 3 auf. Die Meßelektroden 3 sind mit dem durch das Meßrohr 1 fließenden Medium galvanisch leitend gekoppelt. Mit den Magnetspulen 2 wird ein zeitlich alternierendes Magnetfeld erzeugt, das im wesentlichen senkrecht zur Meßrohrachse verläuft. Gemäß dem dargestellten und beschriebenen bevorzugten Ausführungsbeispiel der Erfindung wird ein Magnetfeld verwendet, das zeitlich im wesentlichen einem rechteckförmigen Verlauf folgt und periodisch umgepolt wird, wie aus Fig. 2a ersichtlich. Die Meßelektroden 3 sind derart angeordnet, daß ihre Verbindungslinie einerseits senkrecht zur Meßrohrachse und andererseits senkrecht zu der Richtung des zeitlich alternierenden Magnetfelds verläuft.

Wird nun das Meßrohr 1 von einem Ladungsträger aufweisenden Medium durchströmt, so wird bei eingeschaltetem Magnetfeld eine Spannung induziert, die zwischen den Meßelektroden 3 abgegriffen werden kann. Äquivalent dazu ist der Abgriff der Spannung zwischen einer jeweiligen Meßelektrode 3 einerseits und Erde andererseits. Jedoch beinhaltet die an den Meßelektroden 3 abgegriffene Spannung nicht nur die aufgrund des Magnetfelds und des strömenden Mediums induzierte Spannung, sondern auch eine elektrochemische Störspannung, die durch Kontaktpotentiale des strömenden Mediums mit den Meßelektroden 3 hervorgerufen wird. Wie aus Fig. 2b ersichtlich, ergibt sich somit für die an einer Meßelektrode 3 gegenüber Erde abgegriffene Spannung U ein solcher Verlauf, der symmetrisch zur elektrochemischen Störspannung U_{c} ist. Dabei ist die elektrochemische Störspannung abhängig von der Art des Mediums, nämlich insbesondere von dessen Leitfähigkeit und Ladungsträgerkonzentration.

Zur Messung der elektrochemischen Störspannung gegen Erde dient eine Meßeinrichtung 4. Zur Ermittlung der elektrochemischen Störspannung wird in einer der Meßeinrichtung 4 nachgeschalteten Summiereinrichtung 5 in einer jeden Periode des zeitlich alternierenden Magnetfelds und somit in jeder Periode der abgegriffenen Spannung die Summe der an den beiden Meßelektroden 3 gegenüber dem Referenzpotential, nämlich dem Erdpotential, abgegriffenen Spannung ermittelt. Das von der Summiereinrichtung 5 erzeugte Summensignal wird dann an eine Mittelungseinrichtung 6 weitergegeben, in der eine zeitliche Mittelung über das Summensignal erfolgt. Dieses Signal wird schließlich an eine Ausgabeeinrichtung 7 weitergegeben, mit der die Ausgabe des ermittelten Wertes für den Gleichspannungsanteil der an den beiden Meßelektroden 3 gegenüber Erde abgegriffenen Spannung ausgegeben wird. Diese Ausgabe erfolgt gemäß dem vorliegend beschriebenen bevorzugten Ausführungsbeispiel der Erfindung in Form eines angezeigten Spannungswertes.

Mit diesem angezeigten Spannungswert steht einem Verwender des magnetisch-induktiven Durchflußmeßgeräts ein Wert zur Verfügung, der ihm die Ermittlung der Leitfähigkeit bzw. der Ladungsträgerkonzentration des durch das Meßrohr 1 strömenden Mediums erlaubt. Insbesondere ist durch eine Änderung des von der Ausgabeeinrichtung 7 angezeigten Wertes für den Verwender des magnetisch-induktiven Durchflußmeßgeräts eine Änderung der Leitfähigkeit bzw. der Ladungsträgerkonzentration des Mediums erfaßbar, so daß damit ein Medienwechsel in der Leitung detektierbar ist.

Zur Erdung des durch das Meßrohr 1 strömenden Mediums ist gemäß dem vorliegend beschriebenen bevorzugten Ausführungsbeispiel der Erfindung am Boden des Meßrohrs 1 eine Erdelektrode 8 vorgesehen. Da vorliegend als Referenzpotential des Erdpotential gewählt worden ist, ist für die Erdelektrode 8 ein anderes Material gewählt worden als für die Meßelektroden 3.

Bei einem vorgegebenen magnetisch-induktiven Durchflußmeßgerät und bei gleichbleibendem Medium, das durch das Meßrohr 1 hindurchströmt, ist die elektrochemische Störspannung abhängig von der Geschwindigkeit des durch das Meßrohr 1 strömenden Mediums. Um nun den für die elektrochemische Störspannung ermittelten Wert abhängig von der Geschwindigkeit des durch das Meßrohr 1 strömenden Mediums zu korrigieren, ist folgendes vorgesehen: Die zwischen den Meßelektroden 3 induzierte Spannung wird, wie allgemein bei magnetisch-induktiven Durchflußmeßgeräten üblich, zur Ermittlung des Durchflusses des strömenden Mediums durch das Meßrohr 1 verwendet. Diese eigentliche Durchflußmessung erfolgt in einer Durchflußmeßeinrichtung 9. Mit der Durchflußmeßeinrichtung 9 ist die Ausgabe des für den Durchfluß des strömenden Mediums durch das Meßrohr 1 ermittelten Wertes einerseits mit Hilfe einer optischen Anzeige bzw. über ein Bus-System möglich. Andererseits wird nun gemäß dem vorliegend beschriebenen bevorzugten Ausführungsbeispiel der Erfindung der Wert für den Durchfluß auch einer Korrigiereinrichtung 10 zugeführt, die ihrerseits mit der Ausgabeeinrichtung 7 verbunden ist und den von der Ausgabeeinrichtung 7 ausgegebenen Wert für den Gleichspannungsanteil der abgegriffenen Spannung in Abhängigkeit von dem Durchfluß des strömenden Mediums durch das Meßrohr 1 korrigiert.

Schließlich ist an der Ausgabeeinrichtung 7 ein Statusausgang 11 vorgesehen, der mit einer Schwellwertfunktion ausgerüstet ist. Dieser Schwellwert kann z. B. von dem Verwender des magnetisch-induktiven Durchflußmeßgeräts gemäß dem bevorzugten Ausführungsbeispiel der Erfindung voreingestellt werden, so daß bei einer vorbestimmten Änderung des von der Ausgabeeinrichtung 7 ausgegebenen Wertes für den Gleichspannungsanteil der abgegriffenen Spannung eine Signaleinrichtung, wie eine Lampe 12, aktiviert wird. Das Aktivieren der Lampe 12 ist für den Verwender ein klarer Hinweis darauf, daß ein Medienwechsel in dem Meßrohr 1 aufgrund einer geänderten Ladungskonzentration des strömenden Mediums detektiert worden ist. Vorliegend ist vorgesehen, daß durch die Schwellwertfunktion ein Fenster mit einem oberen Schwellwert und einem unteren Schwellwert definiert wird. Liegt der für den Gleichspannungsanteil der abgegriffenen Spannung ermittelte Wert innerhalb dieses Fenster, entspricht dies einem unveränderten durch das Meßrohr 1 fließenden Medium. Wird der obere Schwellwert jedoch überschritten bzw. der untere Schwellwert unterschritten, so weist dies auf eine die Fehlergrenzen überschreitende Änderung des für den Gleichspannungsanteil der abgegriffenen Spannung ermittelte Wertes hin, so daß Lampe 12 als Hinweis auf einen Medienwechsel aktiviert wird.

## Patentansprüche

1. Magnetisch-induktives Durchflußmeßgerät für strömende Medien, mit einem Meßrohr (1), einem der Erzeugung eines zumindest im wesentlichen senkrecht zur Meßrohrachse verlaufenden und zeitlich alternierenden Magnetfeldes dienenden Magneten und zwei entlang einer zumindest im wesentlichen senkrecht zur Meßrohrachse und zur Magnetfeldrichtung verlaufenden Verbindungslinie angeordneten Meßelektroden (3),
wobei über die Meßelektroden (3) eine Spannung abgreifbar ist,
die Spannung sich aus einem Messspannungsanteil für den Durchtluß des strömenden Mediums durch das Meßrohr (1) und einem Gleichspannungsanteil zusammensetzt,
die Spannung in einer Durchflußmesseinrichtung (9) zur Ermittlung des Durchflusses des strömenden Mediums verwendet wird und der für den Durchfluß des strömenden Mediums ermittelte Wert ausgegeben wird,
**dadurch gekennzeichnet,**
**daß** eine Ausgabeeinrichtung (7) vorgesehen ist, mit der ein Wert für den Gleichspannungsanteil der an einer Meßelektrode (3) oder an beiden Meßelektroden (3) jeweils gegenüber dem Erdpotential als Referenzpotential abgegriffenen Spannung als zusätzliche Information einem Verwender des magnetisch-induktiven Durchflußmeßgeräts angezeigt oder/und dem Verwender zur Weiterverarbeitung zur Verfügung gestellt wird,
so daß durch eine Änderung des Wertes für den Gleichspannungsanteil ein Medienwechsel in dem Meßrohr angezeigt wird.

2. Magnetisch-induktives Durchflußmeßgerät nach Anspruch 1, **dadurch gekennzeichnet, daß** eine Summier- und Mittelungseinrichtung vorgesehen ist, mit der zur Ermittlung des Wertes für den Gleichspannungsanteil die an einer Meßelektrode (3) gegenüber dem Referenzpotential abgegriffene Spannung über mehrere Perioden des zeitlich alternierenden Magnetfelds aufsummierbar und mittelbar ist.

3. Magnetisch-induktives Durchflußmeßgerät nach Anspruch 1, **dadurch gekennzeichnet, daß** eine Summiereinrichtung (5) vorgesehen ist, mit der zur Ermittlung des Wertes für den Gleichspannungsanteil in einer Meßperiode die Summe der an den beiden Meßelektroden (3) gegenüber dem Referenzpotential abgegriffenen Spannungen ermittelbar ist.

4. Magnetisch-induktives Durchflußmeßgerät nach Anspruch 3, **dadurch gekennzeichnet, daß** eine Mittelungseinrichtung (6) vorgesehen ist, mit der zur Ermittlung des Wertes für den Gleichspannungsanteil die Summen der an den Meßelektroden (3) gegenüber dem Referenzpotential abgegriffenen Spannungen über mehrere Perioden des zeitlich alternierenden Magnetfelds mittelbar sind.

5. Magnetisch-induktives Durchflußmeßgerät nach einem der Ansprüche 1 bis 4, **dadurch gekennzeichnet, daß** eine Erdungseinrichtung für das strömende Medium vorgesehen ist.

6. Magnetisch-induktives Durchflußmeßgerät nach Anspruch 5, **dadurch gekennzeichnet, daß** das Material für die Erdungseinrichtung von dem Material für die Meßelektroden (3) verschieden ist.

7. Magnetisch-induktives Durchflußmeßgerät nach Anspruch 5 oder 6, **dadurch gekennzeichnet, daß** wenigstens eine Erdelektrode (8), wenigstens ein Erdungsring und/oder eine wenigstens teilweise metallische Rohrleitung vorgesehen ist.

8. Magnetisch-induktives Durchflußmeßgerät nach einem der Ansprüche 1 bis 7, **dadurch gekennzeichnet, daß** eine Korrigiereinrichtung (10) vorgesehen ist, mit der der Wert für den Gleichspannungsanteil der an einer Meßelektrode (3) oder an beiden Meßelektroden (3) jeweils gegenüber einem Referenzpotential abgegriffenen Spannung in Abhängigkeit von dem Durchfluß des strömenden Mediums korrigierbar ist.

9. Magnetisch-induktives Durchflußmeßgerät nach einem der Ansprüche 1 bis 8, **dadurch gekennzeichnet, daß** eine pH-Berechnungseinrichtung vorgesehen ist, mit der der pH-Wert des strömenden Mediums mit Hilfe des Gleichspannungsanteils der an einer Meßelektrode (3) oder an beiden Meßelektroden (3) jeweils gegenüber einem Referenzpotential abgegriffenen Spannung berechenbar ist.

10. Magnetisch-induktives Durchflußmeßgerät nach einem der Ansprüche 1 bis 8, **dadurch gekennzeichnet, daß** die Ausgabeeinrichtung (7) einen Statusausgang (11) mit einer Schwellwertfunktion aufweist.

11. Magnetisch-induktives Durchflußmeßgerät nach Anspruch 10, **dadurch gekennzeichnet, daß** mit dem Statusausgang (11) ein Medienwechsel anzeigbar ist.

## Claims

1. A magnetoinductive flowmeter for flowing fluids, incorporating a measuring tube (1), a magnet serving to generate a periodically alternating magnetic field that extends in a direction at least essentially perpendicular to the axis of the measuring tube, and two measuring electrodes (3) positioned along a connecting line that extends in a direction at least essentially perpendicular to the axis of the measuring tube and to the vector of the magnetic field,
wherein a voltage is available via the measuring electrodes (3)
the voltage consists of a measured voltage component for the flow of the medium flowing through the measuring tube (1) and a constant voltage component,
the voltage is used in a flowmeter (9) for determining the flow of the flowing medium and the determined value for the flow of the flowing medium is displayed
**characterized in**
**that** an output device (7) is provided by means of which a value for the constant-voltage component of the voltage collected at one or both of the measuring electrodes (3) and differentiated from a earth potential as reference potential, is displayed to the user of the magnetoinductive flowmeter and/or is made available to the user for further processing, so that a media shift in the measuring tube through a difference in the value for the constant voltage component is displayed.

2. The magnetoinductive flowmeter as in claim 1, wherein a summing and averaging device is provided by means of which, for determining the value for the constant voltage component, the voltage collected at a measuring electrode (3) relative to the reference potential is summed and averaged over several cycles of the periodically alternating magnetic field.

3. The magnetoinductive flowmeter as in claim 1, **characterized in that** a summing device (5) is provided by means of which, for determining the value for the constant voltage component in a measuring cycle, the sum of the voltages collected at the two measuring electrodes (3) relative to the reference potential is derived.

4. The magnetoinductive flowmeter as in claim 3, wherein an averaging device (6) is provided by means of which, for determining the value for the constant-voltage component, the sums of the voltages collected at the measuring electrodes (3) relative to the reference potential are averaged over several cycles of the periodically alternating magnetic field.

5. The magnetoinductive flowmeter as in any one of claims 1 to 4, wherein an earthing device is provided for the flowing fluid.

6. The magnetoinductive flowmeter as in claim 5, wherein the material used for the earthing device differs from the material used for the measuring electrodes (3).

7. The magnetoinductive flowmeter as in claim 5 or 6, wherein at least one earth electrode, at least one grounding ring and/or a pipe system consisting at least in part of metal is provided.

8. The magnetoinductive flowmeter as in any one of claims 1 or 7, wherein a correction device (10) is provided which permits the correction of the value for the constant-voltage component of the voltage respectively collected at one or both of the two measuring electrodes (3) relative to a reference potential as a function of the flow rate of the moving fluid.

9. The magnetoinductive flowmeter as in any one of claims 1 or 8, wherein a pH-calculating device is provided which permits the calculation of the pH value of the flowing fluid with the aid of the constant-voltage component of the voltage respectively collected at one or both of the two measuring electrodes (3) relative to the reference potential.

10. The magnetoinductive flowmeter as in any one of claims 1 to 8, wherein the output device (7) includes a status output port (11) having a status-value function.

11. The magnetoinductive flowmeter as in claim 10, wherein by means of the status output (11) a change in fluids is signaled.

## Revendications

1. Débitmètre magnéto-inductif pour des agents s'écoulant, avec un tube de mesure (1), un aimant servant à produire un champ magnétique s'étendant au moins pour l'essentiel perpendiculairement à l'axe du tube de mesure et alternant dans le temps et deux électrodes de mesure (3) disposées le long d'une ligne de jonction s'étendant au moins pour l'essentiel perpendiculairement à l'axe du tube de mesure et à la direction du champ magnétique ;
une tension étant détectable par le biais des électrodes de mesure (3) ;
la tension se composant d'une partie de tension de mesure du débit de l'agent s'écoulant à travers le tube de mesure (1) et d'une partie de tension continue ;
la tension étant utilisée dans un dispositif de mesure du débit (9) pour calculer le débit de l'agent s'écoulant et la valeur calculée correspondant au débit de l'agent s'écoulant étant affichée ;
**caractérisé en ce que** :
un dispositif d'affichage (7) est prévu avec lequel une valeur correspondant à la partie de tension continue de la tension détectée au niveau d'une électrode de mesure (3) ou au niveau des deux électrodes de mesure (3), respectivement par rapport au potentiel de la terre servant de potentiel de référence, est affichée à un utilisateur du débitmètre magnéto-inductif comme une information supplémentaire et/ou mise à la disposition de l'utilisateur pour traitement ultérieur, de sorte qu'une modification de la valeur de la partie de tension continue indique un changement au niveau de l'agent dans le tube de mesure.

2. Débitmètre magnéto-inductif selon la revendication 1, **caractérisé en ce qu'**un dispositif d'additionnement et de calcul de moyenne est prévu avec lequel la tension détectée au niveau d'une électrode de mesure (3) par rapport au potentiel de référence peut être additionnée ou moyennée pour calculer la valeur de la partie de tension continue sur plusieurs périodes du champ magnétique alternant dans le temps.

3. Débitmètre magnéto-inductif selon la revendication 1, **caractérisé en ce qu'**un dispositif d'additionnement (5) est prévu avec lequel la somme des tensions détectées au niveau des deux électrodes de mesure (3) par rapport au potentiel de référence est calculée pour calculer la valeur de la partie de tension continue pendant une période de mesure.

4. Débitmètre magnéto-inductif selon la revendication 3, **caractérisé en ce qu'**un dispositif de calcul de moyenne (6) est prévu avec lequel les sommes des tensions détectées au niveau des électrodes de mesure (3) par rapport au potentiel de référence sont moyennées sur plusieurs périodes du champ magnétique alternant dans le temps pour calculer la valeur de la partie de tension continue.

5. Débitmètre magnéto-inductif selon l'une quelconque des revendications 1 à 4, **caractérisé en ce qu'**un dispositif de liaison à la terre est prévu pour l'agent s'écoulant.

6. Débitmètre magnéto-inductif selon la revendication 5, **caractérisé en ce que** le matériau utilisé pour le dispositif de liaison à la terre est différent du matériau utilisé pour les électrodes de mesure (3).

7. Débitmètre magnéto-inductif selon la revendication 5 ou 6, **caractérisé en ce qu'**au moins une électrode de terre (8), au moins un anneau de mise à la terre et/ou une conduite tubulaire au moins en partie métallique sont prévus.

8. Débitmètre magnéto-inductif selon l'une quelconque des revendications 1 à 7, **caractérisé en ce qu'**un dispositif de correction (10) est prévu avec lequel la valeur de la partie de tension continue de la tension détectée au niveau d'une électrode de mesure (3) ou des deux électrodes de mesure (3), respectivement par rapport à un potentiel de référence, peut être corrigée en fonction du débit de l'agent s'écoulant.

9. Débitmètre magnéto-inductif selon l'une quelconque des revendications 1 à 8, **caractérisé en ce qu'**un dispositif de calcul de pH est prévu avec lequel la valeur de pH de l'agent s'écoulant peut être calculée à l'aide de la partie de tension continue de la tension détectée au niveau d'une électrode de mesure (3) ou des deux électrodes de mesure (3), respectivement par rapport à un potentiel de référence.

10. Débitmètre magnéto-inductif selon l'une quelconque des revendications 1 à 8, **caractérisé en ce que** le dispositif d'affichage (7) comporte une sortie d'état (11) équipé d'une fonction de valeur seuil.

11. Débitmètre magnéto-inductif selon à revendication 10, **caractérisé en ce qu'**un changement d'agent peut être affiché à l'aide de la sortie d'état (11).
